(19) Europäisches Patentamt
European Patent Office
Office européen des brevets

(11) **EP 3 674 685 A1**

(12) **EUROPEAN PATENT APPLICATION**

(43) Date of publication:
**01.07.2020 Bulletin 2020/27**

(51) Int Cl.:
***G01N 15/10*** *(2006.01)*

(21) Application number: **19171936.8**

(22) Date of filing: **30.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018 EP 18248251**

(71) Applicant: **IHP GmbH - Innovations for High Performance Microelectronics / Leibniz-Institut für innovative Mikroelektronik 15236 Frankfurt (Oder) (DE)**

(72) Inventors:
• **Kissinger, Dietmar**
**89077 Ulm (DE)**
• **Wessel, Jan**
**12055 Berlin (DE)**
• **Klatt, Jörg**
**15295 Brieskow-Finkenheerd (DE)**
• **Dannemann, Marco**
**12623 Berlin (DE)**

(74) Representative: **Eisenführ Speiser Patentanwälte Rechtsanwälte PartGmbB Anna-Louisa-Karsch-Strasse 2 10178 Berlin (DE)**

(54) **BIOCHEMICAL FLUID ANALYSIS DEVICE AND METHOD**

(57)     A biochemical fluid analysis device comprises a measurement unit with a measurement volume for a biochemical fluid comprising biochemical particles. A voltage generator receives generation parameters and provide an output voltage signal having a predetermined output frequency spectrum and a predetermined output phase spectrum via an output terminal, for exposing the measurement volume to an output electromagnetic field. A detector unit measures via an input terminal an input electromagnetic field and provides a measurement signal indicative of an input frequency spectrum and of an input phase spectrum of the input electromagnetic field. An analysis control unit provides the generation parameters and receives the measurement signal from the detector unit, to compute and provide particle response data indicative of a frequency response and a phase response of the biochemical particles in the biochemical fluid.

FIG. 1

EP 3 674 685 A1

**Description**

The present invention is directed to a biochemical fluid analysis device and a method for performing biochemical fluid analysis.

Typically, the counting and determination of a type and a local distribution of particles in bio-chemical media is performed by optical microscopy. This requires a particularly high expenditure for laboratory processing in preparation of a measurement, which in turn requires personnel and equipment. In addition, this method is completely unsuitable for use in miniaturized systems.

According to a first aspect of the invention a biochemical fluid analysis device is provided. The biochemical fluid analysis device comprises at least one measurement unit that includes a measurement volume, a voltage generator, and a detection unit. The measurement volume accommodates a biochemical fluid that comprises biochemical particles suspended in a fluid. The voltage generator is configured to receive generation parameters and, based on the generation parameters, to generate and provide an output voltage signal via at least one output terminals for exposing the measurement volume to an output electromagnetic field. The output voltage signal has a predetermined output frequency spectrum and a predetermined output phase spectrum. The detector unit is configured to measure via at least one input terminal an input electromagnetic field, which is the output electromagnetic field filtered by the biochemical fluid in the measurement volume. Moreover, the detector unit is configured to provide a measurement signal indicative of an input frequency spectrum and of an input phase spectrum of the input electromagnetic field. Furthermore, the biochemical fluid analysis device further comprises an analysis control unit which is configured to provide the generation parameters to the voltage generator and to receive the measurement signal from the detector unit. Furthermore, the analysis control unit is configured to compute and provide particle response data indicative of a frequency response and of a phase response of the biochemical particles in the biochemical fluid, using the output voltage signal and the measurement signal.

The invention is based on the recognition that the electrical transmission properties of particles in a biochemical medium are directly dependent on the biochemical composition and in particular on a type and number of particles it contains. This results in a direct relationship between electrical measurables or quantities that can be derived from such measurables and the number, type and local presence of the particles in the biochemical medium.

For this purpose, an output voltage signal of a predetermined output frequency spectrum and a predetermined output phase spectrum, for instance in the form of an electrical alternating signal is impressed into the biochemical medium via an output terminal such as one or more electrodes or antennas, and the transmitted alternating signal is measured via an input terminal, that can also be implemented by one or more electrodes or antennas, which are different from those of the output terminal.

In the following, embodiments of the biochemical fluid analysis device will be described.

Suitable examples of an output voltage signal, which is impressed into the biochemical medium, are electrical alternating signals such as a sine wave, a square wave, a triangle wave, a sew tooth wave, or a pulsed signal. However, other signals are possible as well.

In one embodiment of the biochemical fluid analysis device, the measurement unit is configured to operate, for providing the particle response data, in response to receiving a measurement trigger signal. Furthermore, the analysis control unit is configured to compute the particle response data using two sets of the measurement signals, which have been obtained in response to reception of two measurement trigger signals. This alternative embodiment is particularly useful for determining the difference in the particle response data when the biochemical fluid contained in the measurement volume is changed in between measurements. This is advantageous when, for example, determining a difference between the particle response data of the measurement volume containing only the fluid and the measurement volume containing the fluid and the biochemical particles. Moreover, the alternative embodiment is advantageous when determining a difference between the particles response data of the measurement volume containing a fluid and a first type of bio-chemical particles and the measurement volume containing the fluid and a second type of biochemical particles.

In yet another embodiment of the biochemical fluid analysis device, the measurement unit additionally comprises a temperature sensor, which is configured to determine a temperature of the biochemical fluid between the input and output terminals during measurement of the input electromagnetic field. Moreover, the analysis control unit is configured to compute and provide the particle response data additionally using the determined temperature of the biochemical fluid. This embodiment is advantageous when a change in temperature effects the particle response data. Particularly, when particle response data of different measurements under varying temperature conditions are compared, the temperature determined by the temperature sensor is used to correct the particle response data for the varying temperature conditions.

In another alternative embodiment, the biochemical fluid analysis device comprises a plurality of measurement units that are each connected to the analysis control unit. The analysis control unit is configured to provide the respective generation parameters to each of the measurement units and to receive from each of the measurement units the respective measurement signal, and to compute and provide the respective particle response data for each measurement unit using the respective output voltage signal and the respective measurement signal. This embodiment is particularly advantageous for performing measurements of the particle response data of different measurement volumes in parallel.

In yet another embodiment of the biochemical fluid analysis device, the voltage generator, the detector unit, and the analysis control unit are comprised by a single microchip. The output terminal and the input terminal are arranged externally with respect to the microchip and connected to respective output and input ports of the microchip. An inclusion of the voltage generator, the detector unit, and the analysis control unit into a single microchip is advantageous for providing a compact biochemical fluid analysis device.

In yet another embodiment of the biochemical fluid analysis device, the detector unit comprises a plurality of input terminals spatially distributed over the measurement volume, and is configured to measure via each of the input terminals the respective input electromagnetic field and to provide the respective measurement signal for each of the plurality of input terminals. Moreover, the analysis control unit receives from the measurement unit the measurement signals of the plurality of input terminals and is configured to compute and provide the particle response data in the form of a set of different local particle response data indicative of a spatial distribution of the biochemical particles in the biochemical fluid, using the output voltage signal and the measurement signals of the plurality of input terminals.

In a variant of this embodiment of the biochemical fluid analysis device, the voltage generator unit comprises a plurality of output terminals for exposing the measurement volume to the output voltage signal. Moreover, the input and output terminals are spatially distributed in pairs of one input and one output terminal over the measurement volume, such that the output voltage signal provided by output terminal of a given pair and filtered by the bio-chemical fluid in the measurement volume provides for a predominant component of the input electromagnetic field to be detected by the input terminal.

In another variant of this embodiment of the biochemical fluid analysis device, the terminals are spatially distributed in a matrix-like pattern over the measurement volume. A matrix-like pattern for the spatial distribution is particularly advantageous, since it spatially divides the measurement volume into measurement subvolumes for analyzing a spatial distribution of the biochemical particles.

The matrix-like pattern can be used for either the distribution of output terminals or, for variants that comprise a plurality of output and input terminals, for pairs of one input and one output terminal.

In another embodiment of the biochemical fluid analysis device, the detector unit is configured to measure the input electromagnetic field as a function of time. Furthermore, the analysis control unit is configured to additionally provide particle response data indicative of a time-response of the biochemical particles in the biochemical fluid to the output voltage signal, using the measured input electromagnetic field.

An analysis of the time-response forms a complementary method that can be used in addition to analyzing the frequency response or to analyzing the phase response of the bio-chemical particles. It is particularly advantageous in combination with the use of a pulsed output voltage signal. Nevertheless, it can also be used with periodic electromagnetic output field.

In another embodiment of the biochemical fluid analysis device, the analysis control unit is configured to calculate a transfer function of the biochemical fluid under test from a fit to the measurement signal using a fit model based on an equivalent circuit comprised of passive electrical components, and to determine from the transfer function model parameters of quantities characterizing the electrical components. Furthermore, the analysis control unit comprises a particle-identification unit that comprises a memory storing biochemical particles finger-print data allocating to each of a set of biochemical particles reference model parameters characterizing the electrical components of the fit model, and that is configured to identify biochemical particles in the measurement volume using the finger-print data and the determined model parameters.

Using a fit model based on an equivalent circuit is particularly advantageous, since the biochemical particles comprised by the biochemical fluid often act as an electromagnetic filter for the electromagnetic output field. Equivalent circuits provide an advantageous way of modeling effects of the electromagnetic filter on the electromagnetic output field. The resistance, capacitance, and/or inductance properties of the passive electrical components comprised by the equivalent circuit correspond to the electromagnetic properties of the biochemical particles contained within the biochemical fluid. The finger-print data that is required for identifying the biochemical particles within the biochemical fluid can be obtained by performing calibration measurements.

For those biochemical fluid analysis devices that comprise measurement units with a plurality of output terminals, it is also possible to identify the local concentration of biochemical particles within the biochemical fluid by fitting with particle response data with the transfer function of an equivalent circuit and using finger-print data to identify the type and a local concentration of the biochemical particles.

In a variant of this embodiment, the equivalent circuit is a low-pass filter circuit. The use of the transfer function of the low-pass filter circuit is particularly advantageous, since bio-chemical fluids very often display a transfer function that is similar to the transfer function of the low-pass filter circuit.

In another embodiment of the biochemical fluid analysis device, the biochemical fluid analysis unit is integrated into a microfluidic chip. The biochemical fluid analysis device is particularly advantageous to be monolithically integrated into a microfluidic chip.

According to a second aspect of the invention, a method for performing biochemical fluid analysis is provided. The method comprises providing a measurement volume for accommodating a biochemical fluid that comprises biochemical particles suspended in a fluid, providing generation parameters to a voltage generator. Moreover, the method comprises the voltage generator receiving the generation parameters and, based on the generation parameters, generating and providing an output voltage signal having a predetermined output frequency spectrum and a predetermined output phase spectrum via at least one output terminal for exposing the measurement volume to an output electromagnetic field. Furthermore, the method includes measuring via at least one input terminal an input electromagnetic field, which is the output electromagnetic field filtered by the biochemical fluid in the measurement volume, and providing a measurement signal indicative of an input frequency spectrum and of an input phase spectrum of the input electromagnetic field. The method further comprises receiving the measurement signal from the detector unit, and computing and providing particle response data indicative of a frequency response and of a phase response of the biochemical particles in the biochemical fluid, using the output voltage signal and the measurement signal.

The method of the second aspect of the invention shares the advantages described above in the context of the biochemical fluid analysis device of the first aspect of the invention.

In the following, further embodiments will be described with reference to the enclosed drawings. In the drawings:

Fig. 1 shows a first embodiment of a biochemical fluid analysis device according to the first aspect of the invention.

Fig. 2 shows a second embodiment of the biochemical fluid analysis device.

Fig. 3 shows a third embodiment of the biochemical fluid analysis device.

Fig. 4 shows an example of an output voltage signal and an input voltage signal corresponding to an input electromagnetic field in a time-domain graph.

Fig. 5 shows exemplary Bode plots of different biochemical fluids that were investigated using the biochemical fluid analysis device.

Fig. 6 shows an equivalent circuit diagram of a low-pass filter.

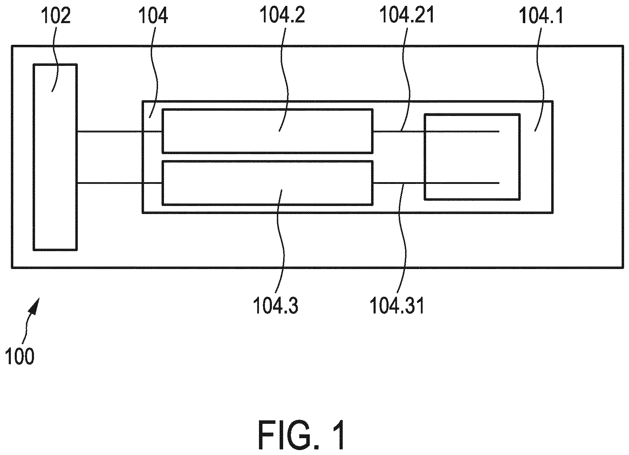

Fig. 1 shows a first embodiment of a biochemical fluid analysis device 100. The biochemical fluid analysis device 100 comprises an analysis control unit 102 and a measurement unit 104. The measurement unit 104 includes a measurement volume 104.1 that is filled with a biochemical fluid, which contains biochemical particles suspended in a fluid. Moreover, the measurement unit 104 includes a voltage generator 104.2 and a detector unit 104.3.

The analysis control unit 102 provides the generator parameters to the voltage generator. The voltage generator is configured to receive the generation parameters and, based on the generation parameters, to generate and provide an output voltage signal having a predetermined output frequency spectrum and a predetermined output phase spectrum via an output terminal 104.21 for exposing the measurement volume to an output electromagnetic field. The detector unit is configured to measure via an input terminal 104.31 an input electromagnetic field, which is the output electromagnetic field filtered by the biochemical fluid in the measurement volume 104.1, and to provide a measurement signal indicative of an input frequency spectrum and of an input phase spectrum of the input electromagnetic field. The analysis control unit 102 receives the measurement signal from the detector unit 104.3, and to compute and provide particle response data indicative of a frequency response and of a phase response of the biochemical particles in the biochemical fluid, using the output voltage signal and the measurement signal.

In another advantageous embodiment of the biochemical fluid analysis device (not shown here), the detector unit comprises a plurality of input terminals that are spatially distributed over the measurement volume. The detector unit of this embodiment is configured to measure via each of the input terminals the respective input electromagnetic field and to provide the respective measurement signal for each of the plurality of input terminals. Furthermore, the analysis control unit receives from the measurement unit the measurement signals of the plurality of input terminals and is configured to compute and provide the particle response data in the form of a set of different local particle response data indicative of a spatial distribution of the biochemical particles in the biochemical fluid, using the output voltage signal and the measurement signals of the plurality of input terminals.

In a variant of this embodiment of the biochemical fluid analysis device (also not shown here), the voltage generator unit also comprises a plurality of output terminals for exposing the measurement volume to the output electric field. Moreover, the input and output terminals are spatially distributed in pairs of one input and one output terminal over the measurement volume.

In one example, the pairs of input and output terminals are arranged along a channel in a microfluidic chip to measure the particle flow through different parts of the channel.

In another example, the measurement volume comprises a larger vessel and the pairs of input and output terminals are distributed over the larger vessel to measure the particle distribution within the vessel.

In a variant of the biochemical fluid analysis device 100 shown in Fig. 1, the detector unit 104.3 is configured to measure the input electromagnetic field as a function of time, and the analysis control unit 102 is configured to additionally provide particle response data indicative of a time-response of the biochemical particles in the biochemical fluid to the output voltage signal, using the measured input electromagnetic field.

In another variant of the biochemical fluid analysis device 100 shown in Fig. 1, the analysis control unit 102 is configured to calculate a transfer function of the biochemical fluid under test from a fit to the measurement signal using a fit model based on an equivalent circuit comprised of passive electrical components, and to determine from the transfer function model parameters of quantities characterizing the electrical components. Moreover, the analysis control unit 102 comprises a particle-identification unit that comprises a memory storing biochemical particles finger-print data allocating to each of a set of biochemical particles reference model parameters characterizing the electrical components of the fit model, and that is configured to identify biochemical particles in the measurement volume using the finger-print data and the determined model parameters.

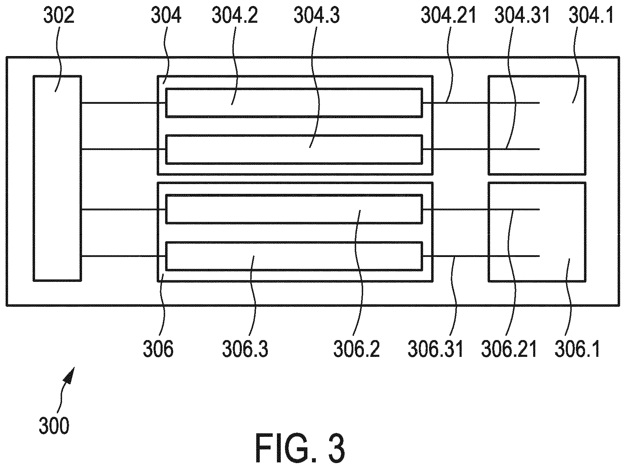

A microchip is preferably used for generating the AC voltage and measuring the filter properties and can even be completely integrated into a given biochemical system. This can be done in both single-channel and multi-channel systems (cf. Fig. 3). The outputs of the microchip are directly connected to the electrodes in the biochemical fluid.

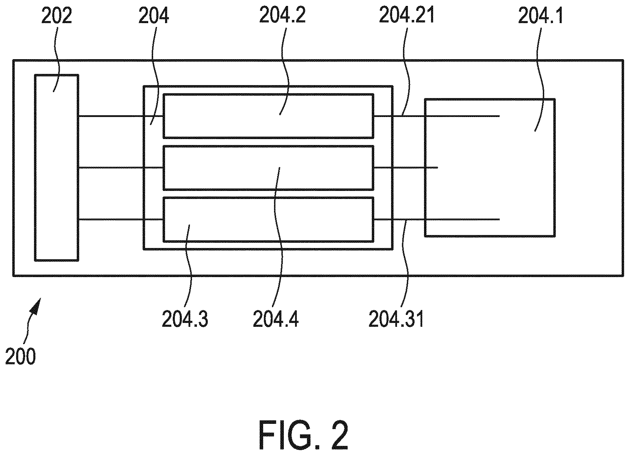

Fig. 2 shows a second embodiment of a biochemical fluid analysis device 200. All the components of the biochemical fluid analysis device 100 of Fig. 1 are also included in the bio-chemical fluid analysis device 200. The numbering of those components of Fig. 2, which have a correspondence in the embodiment of Fig. 1, can be converted to the numbering of Fig. 1 by subtracting 100 from each number. Therefore, reference is also made to the description of Fig. 1. In addition to the biochemical fluid analysis device 100 of Fig. 1, the biochemical analysis device 200 includes a temperature sensor 204.4, which is configured to determine a temperature of the biochemical fluid between the input and output terminals 204.21 and 204.31 during measurement of the input electromagnetic field. Moreover, the analysis control unit 202 is configured to compute and provide the particle response data additionally using the determined temperature of the biochemical fluid.

Fig. 3 shows a third embodiment of a biochemical fluid analysis device 300. The biochemical fluid analysis device 300 includes an analysis control unit 302, and two measurement units 304 and 306. Each measurement units 304 and 306 includes a measurement volume labeled 304.1 and 306.1, respectively, a voltage generator labeled 304.2 and 306.2, respectively, and a detector unit labeled 304.3 and 306.3, respectively.

The configurations of the measurement units 304 and 306 are identical. The analysis control unit 302 provides the generator parameters to the voltage generators 304.2 and 306.2. The voltage generators 304.2 and 306.2 are configured to receive the generation parameters and, based on the generation parameters, to generate and provide an output voltage signal having a predetermined output frequency spectrum and a predetermined output phase spectrum via an output terminal 304.21 and 306.21, respectively, for exposing the measurement volume 304.1 and 306.1 to an output electromagnetic field. The detector units 304.3 and 306.3 are configured to measure via an input terminal 304.31 and 306.31, respectively, an input electromagnetic field, which is the output electromagnetic field filtered by the bio-chemical fluid in the measurement volume 304.1 and 306.1, and to provide a measurement signal indicative of an input frequency spectrum and of an input phase spectrum of the input electromagnetic field. The analysis control unit 302 receives the measurement signal from the detector units 304.3 and 306.3, and to compute and provide particle response data indicative of a frequency response and of a phase response of the biochemical particles in the biochemical fluid, using the output voltage signal and the measurement signal.

In variants of the biochemical fluid analysis device 300, the biochemical fluid analysis device 300 contains more than 2 measurement units. Moreover, in yet another variant, the at least one measurement unit of the biochemical fluid analysis unit 300 also includes a temperature sensor.

After a detailed description of the biochemical fluid analysis unit has been given, the following description turns to exemplary particle response data obtained through measurements using the biochemical fluid analysis unit.

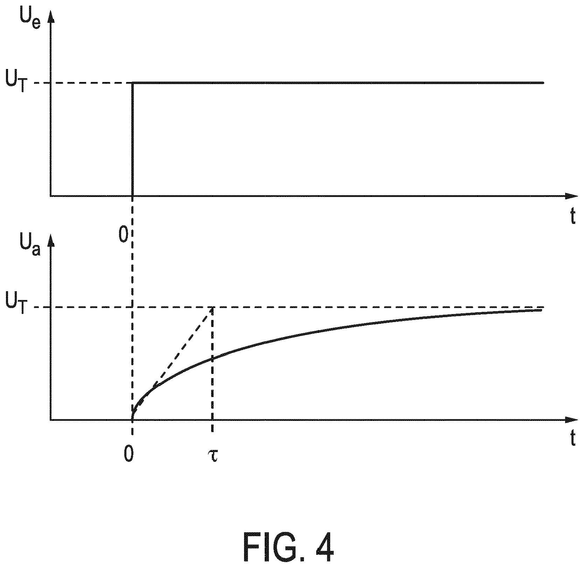

Fig. 4 shows an example of an output voltage signal $U_e$ and an input voltage signal $U_a$ corresponding to an input electromagnetic field in a time-domain graph.

The output voltage signal $U_e$ as generated by the voltage generator is shown in the upper plot of Fig. 4. The output voltage signal $U_e$ is a step function that changes its voltage value from 0 to $U_T$ at time t=0.

The voltage signal $U_a$ corresponding to the input electromagnetic field as measured by the detector unit is shown in the lower plot of Fig. 4. The input voltage signal $U_a$ measured by the detector unit corresponds to the input voltage signal $U_a$ after having passed through the biochemical fluid.

As can be seen from the lower plot, the input voltage signal $U_a$ does not possess a step-like behavior at time t=0, like the output voltage signal $U_e$, but rather an exponential increase that approaches the voltage $U_T$ only in its limit. The delayed increase of the voltage is due to a transmission of the electromagnetic field through the biochemical fluid.

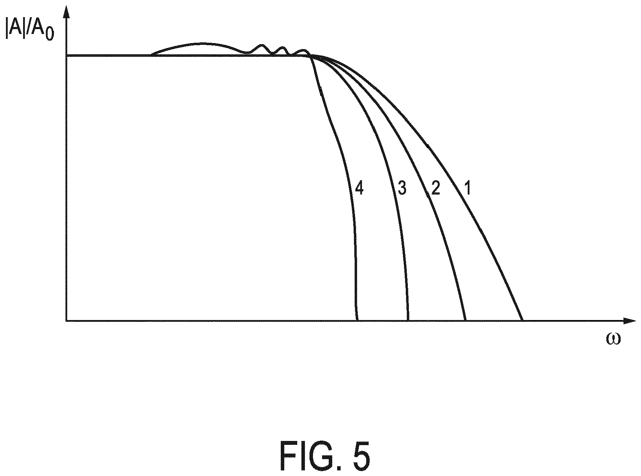

To obtain additional information on the filtering of the output voltage signal $U_e$ by the bio-chemical fluid, the difference between output the voltage signal $U_e$ and the input voltage signal $U_a$ is analyzed in frequency space. Such an analysis is shown in Fig. 5.

Fig. 5 shows exemplary Bode plots of different biochemical fluids investigated using an embodiment of the biochemical fluid analysis device.

The analysis shown in Fig. 5 was conducted on 5 different samples. A base sample comprised a biochemical base fluid. Samples 1-4 comprised a concentration of a particle dissolved in the same biochemical base fluid. The concentration of the particles varied in samples 1-4 such that sample 1 comprised a lowest concentration of particles, sample 2 a second lowest, sample 3 a third lowest concentration and sample 4 a highest concentration of particles.

The Bode plots show the absolute amplitude |A| of the input electromagnetic field measured for samples 1-4 divided by the amplitude $A_0$ of the input electromagnetic field measured for the base sample as a function of a frequency $\omega$. The quotients of the amplitudes will hereinafter also be referred to as amplitude ratio.

From Fig. 5, it can be seen that the amplitude ratio is constant and identical for all biochemical samples for low frequencies and declines rapidly for large frequencies. The frequency at which the amplitude ratio begins to decline is largest for sample 1 and decreases for each consecutive sample.

Inspecting the results of the transmission measurements closely, it can be seen that the Bode plots closely resemble those of a low-pass filter, wherein the single biochemical parameter directly affects a cut-off frequency of the low-pass filter.

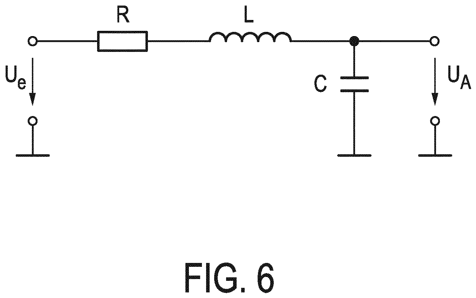

To determine the effect of the single biochemical parameter on the cut-off frequency, the amplitude ratio is fitted with a well-known transfer function of an equivalent circuit low-pass filter (cf. Fig. 6). Once a quantitative relationship between the single biochemical parameter and the cut-off frequency is known, the value of the single biochemical parameter is determined for biochemical samples with an unknown concentration of particles.

The idea of measuring analyzing Bode plots using equivalent circuits has been proven to be advantageous. This analysis method will be further discussed in the context of Fig. 6

Fig. 6 shows an equivalent circuit diagram of a low-pass filter. The low-pass filter comprises an input voltage UE, and an output voltage UA, a resistor R, a capacitor C, and an inductor L.

The input voltage $U_E$ of Fig. 6 can be identified with an output voltage signal that is emitted by a voltage generator of a biochemical fluid analysis device. Similarly, the output voltage $U_A$ of Fig. 6, can be identified with a voltage corresponding to an electromagnetic field that is measured by a detector unit of the biochemical fluid analysis device.

The equivalent circuit shown in Fig 6 is used to analyze the effect of the biochemical particles on the output electromagnetic field. The biochemical particles possess electromagnetic properties that influence the transmission of the electromagnetic field through the biochemical fluid and, therefore, act as a filter. The filter is characterized by a transfer function which is determined by the electromagnetic properties of the biochemical particles. These electromagnetic properties of the biochemical particles are directly identified with the electromagnetic properties of resistance R, capacitance C, and/or inductance L of electronic components contained within the circuit. As a result, from the determined values characterizing the electric properties of the components contained within the equivalent circuit, conclusions about the type and concentration of the biochemical particles within the bio-chemical fluid are made.

Thus, in the approach pursued here, it even becomes possible to determine a number, type and local distribution of particles in a biochemical medium by measuring their electrical filter properties and the resulting amplitude of filter coefficients.

If an alternating electrical signal is applied to an input of a filter and the transmitted signal is measured at an output, filters can be clearly characterized by measuring the amplitude frequency response and their phase position. The frequency response results from a ratio of the output and input signal UA/UE. Mathematically, from the frequency response a transfer function can be determined by transferring the frequency response to the Laplace domain, as it is generally known per se for a nth-order low-pass filter. From this, positive real coefficients of the filter can be determined.

$$A(s_n) = \frac{A_0}{1 + c_1 s_n + c_2 s_n^2 + \cdots + c_n s_n^n} \qquad (1)$$

Here, Ao is a DC voltage gain, $c_1, c_2 \ldots, c_n$ are positive real coefficients and $s_n$ is a normalized complex frequency variable.

The amplitude of the coefficients cn of a filter is directly dependent on its transmission properties.

By measuring the transfer function in the frequency domain and the step response in the time domain, it is possible to determine the filter type and its order. The transfer function can then be described analytically with the aid of an equivalent circuit diagram and the coefficients determined by fitting. This can be done directly by a connected microprocessor.

For this purpose, an electrical alternating signal is impressed into the biochemical medium via corresponding electrodes and the transmitted alternating signal is measured via other electrodes. This typically happens first without and later with the addition of particles/particles.

Thus, in the solution approach pursued here, it is proposed to determine the number, type and local distribution of particles in a biochemical medium by measuring electrical filter properties and determining the corresponding amplitude of the filter coefficients. In one embodiment, by measuring the transfer function in the frequency domain and a step response in the time domain, it is possible to determine the filter type and its order. The transfer function can then be described analytically with the aid of an equivalent circuit diagram and the coefficients determined by fitting. This is done in some embodiments directly by a connected microprocessor.

The microchip comprising the electrical circuitry is suitably constructed in a suitable CMOS or BiCMOS technology. The chip can be fabricated as a single chip or in a multi-chip variant using a common housing. In the latter variant, after production and assembly, the microchips are integrated directly into single or multi-channel systems.

A preferred application of the devices described is in cell counting, cell location and cell type determination. This advantageously can be performed without any influence on the bio-chemical process.

**Claims**

1. A biochemical fluid analysis device (100) comprising

   - at least one measurement unit (104) that includes

      - a measurement volume (104.1) for accommodating a biochemical fluid that comprises biochemical particles suspended in a fluid,
      - a voltage generator (104.2) that is configured to receive generation parameters and, based on the generation parameters, to generate and provide an output voltage signal having a predetermined output frequency spectrum and a predetermined output phase spectrum via at least one output terminal (104.21) for exposing the measurement volume to an output electromagnetic field, and
      - a detector unit (104.3) that is configured to measure via at least one input terminal (104.31) an input electromagnetic field, which is the output electromagnetic field filtered by the biochemical fluid in the measurement volume, and to provide a measurement signal indicative of an input frequency spectrum and of an input phase spectrum of the input electromagnetic field,

   wherein the biochemical fluid analysis device further comprises
   - an analysis control unit (102) which is configured to provide the generation parameters to the voltage generator and to receive the measurement signal from the detector unit, and to compute and provide particle response data indicative of a frequency response and of a phase response of the biochemical particles in the biochemical fluid, using the output voltage signal and the measurement signal.

2. The biochemical fluid analysis device (100) of claim 1, wherein

   - the measurement unit (104) is configured to operate, for providing the particle response data, in response to receiving a measurement trigger signal; and wherein
   - the analysis control unit (102) is configured to compute the particle response data using two sets of the measurement signals, which have been obtained in response to reception of two measurement trigger signals.

3. The biochemical fluid analysis device (200) of claim 1 or 2, wherein

   - the measurement unit (204) additionally comprises a temperature sensor (204.4), which is configured to determine a temperature of the biochemical fluid between the input (204.31) and output terminals (204.21) during measurement of the input electromagnetic field; and wherein
   - the analysis control unit (202) is configured to compute and provide the particle response data additionally using the determined temperature of the biochemical fluid.

4. The biochemical fluid analysis device (300) of one of the preceding claims, comprising

   - a plurality of measurement units (304, 306) that are each connected to the analysis control unit (302); wherein
   - the analysis control unit (302) is configured to provide the respective generation parameters to each of the measurement units (304, 306) and to receive from each of the measurement units (304, 306) the respective measurement signal, and to compute and provide the respective particle response data for each measurement unit (304, 306) using the respective output voltage signal and the respective measurement signal.

5. The biochemical fluid analysis device of one of the preceding claims, wherein the voltage generator, the detector unit and the analysis control unit are comprised by a single microchip, and wherein the output terminal and the input terminal are arranged externally with respect to the microchip and connected to respective output and input ports of the microchip.

6. The biochemical fluid analysis device of one of the preceding claims, wherein

   - the detector unit comprises a plurality of input terminals spatially distributed over the measurement volume, and is configured to measure via each of the input terminals the respective input electromagnetic field and to provide the respective measurement signal for each of the plurality of input terminals; and
   - the analysis control unit receives from the measurement unit the measurement signals of the plurality of input terminals and is configured to compute and provide the particle response data in the form of a set of different local particle response data indicative of a spatial distribution of the biochemical particles in the biochemical fluid, using the output voltage signal and the measurement signals of the plurality of input terminals.

7. The biochemical fluid analysis device of claim 6, wherein

   - the voltage generator unit comprises a plurality of output terminals for exposing the measurement volume to the output electric field; and
   - the input and output terminals are spatially distributed in pairs of one input terminal and one output terminal over the measurement volume, such that the output electromagnetic field provided by output terminal of a given pair and filtered by the biochemical fluid in the measurement volume provides for a predominant component of the input electromagnetic field detected by the input terminal.

8. The biochemical fluid analysis device of 6 or 7, wherein the terminals are spatially distributed in a matrix-like pattern over the measurement volume.

9. The biochemical fluid analysis device (100) of one of the preceding claims, wherein the detector unit (104.3) is configured to measure the input electromagnetic field as a function of time, and wherein the analysis control unit (102) is configured to additionally provide particle response data indicative of a time-response of the biochemical particles in the bio-chemical fluid to the output voltage signal, using the measured input electromagnetic field.

10. The biochemical fluid analysis device (100) of one of the preceding claims, wherein

    - the analysis control unit (102) is configured to calculate a transfer function of the biochemical fluid under test from a fit to the measurement signal using a fit model based on an equivalent circuit comprised of passive electrical components, and to determine from the transfer function model parameters of quantities characterizing the electrical components; and wherein
    - the analysis control unit (102) comprises a particle-identification unit that comprises a memory storing bio-chemical particles finger-print data allocating to each of a set of bio-chemical particles reference model parameters characterizing the electrical components of the fit model, and that is configured to identify biochemical particles in the measurement volume using the finger-print data and the determined model parameters.

11. The biochemical fluid analysis device (100) of claim 10, wherein the equivalent circuit is a low-pass filter circuit.

12. The biochemical fluid analysis device of one of the preceding claims, wherein the biochemical fluid analysis unit is integrated into a microfluidic chip.

13. A method for performing biochemical fluid analysis, comprising

    - providing a measurement volume for accommodating a biochemical fluid that comprises biochemical particles suspended in a fluid,
    - providing generation parameters to a voltage generator;
    - the voltage generator receiving the generation parameters and, based on the generation parameters, generating and providing an output voltage signal having a predetermined output frequency spectrum and a predetermined output phase spectrum via at least one output terminal for exposing the measurement volume to an output electromagnetic field,
    - measuring via at least one input terminal an in-put electromagnetic field, which is the output electromagnetic field filtered by the bio-chemical fluid in the measurement volume, and providing a measurement signal indicative of an input frequency spectrum and of an input phase spectrum of the input electromagnetic field;
- receiving the measurement signal from the detector unit, and computing and providing particle response data indicative of a frequency response and of a phase response of the biochemical particles in the biochemical fluid, using the output voltage signal and the measurement signal.

FIG. 1

202    204    204.2    204.21    204.1

204.3    204.4    204.31

200

FIG. 2

302  304  304.2  304.3  304.21  304.31  304.1

306  306.3  306.2  306.31  306.21  306.1

300

FIG. 3

FIG. 4

FIG. 5

FIG. 6

Europäisches
Patentamt

European
Patent Office

Office européen
des brevets

# EUROPEAN SEARCH REPORT

**Application Number**

EP 19 17 1936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/305499 A1 (MATSIEV LEONID [US] ET AL) 2 December 2010 (2010-12-02) * paragraphs [0005], [0012], [0015], [0022], [0034], [0092], [0093], [0099], [0109] - [0111], [0124], [0159] - [0163], [0166], [0237]; figures 1,3,7A,13A-13D,14 * * paragraphs [0112], [0128], [0187] * ----- | 1-13 | INV. G01N15/10 |
| X | US 2016/018347 A1 (DRBAL VLADIMIR J [US] ET AL) 21 January 2016 (2016-01-21) * paragraphs [0092], [0161], [0195], [0196], [0203], [0215], [0256], [0272], [0289] - [0295], [0309], [0348], [0408]; figures 1,11A,11B,12,13A,13B,14 * ----- | 1-13 | |
| X | US 2014/182363 A1 (POTYRAILO RADISLAV ALEKSANDROVICH [US] ET AL) 3 July 2014 (2014-07-03) * paragraphs [0041], [0002], [0025], [0032], [0038], [0043], [0049], [0051], [0062], [0064] - [0084], [0089], [0090]; figures 1,2,4-8 * ----- | 1-13 | **TECHNICAL FIELDS SEARCHED (IPC)** G01N B01L |

The present search report has been drawn up for all claims

| Place of search | Date of completion of the search | Examiner |
|---|---|---|
| The Hague | 29 November 2019 | Eidmann, Gunnar |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

......................................................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 19 17 1936

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2019

| Patent document cited in search report | Publication date | Patent family member(s) | | Publication date |
|---|---|---|---|---|
| US 2010305499 A1 | 02-12-2010 | AU | 2010258872 A1 | 15-12-2011 |
| | | CA | 2763776 A1 | 16-12-2010 |
| | | CN | 102460137 A | 16-05-2012 |
| | | EP | 2440910 A2 | 18-04-2012 |
| | | EP | 2545851 A2 | 16-01-2013 |
| | | JP | 5615914 B2 | 29-10-2014 |
| | | JP | 2012529656 A | 22-11-2012 |
| | | KR | 20120037455 A | 19-04-2012 |
| | | RU | 2011154222 A | 20-07-2013 |
| | | SG | 176600 A1 | 30-01-2012 |
| | | US | 2010305499 A1 | 02-12-2010 |
| | | WO | 2010144482 A2 | 16-12-2010 |
| | | ZA | 201108790 B | 27-05-2015 |
| US 2016018347 A1 | 21-01-2016 | US | 2016018347 A1 | 21-01-2016 |
| | | WO | 2014164809 A1 | 09-10-2014 |
| US 2014182363 A1 | 03-07-2014 | CN | 105264550 A | 20-01-2016 |
| | | EP | 2939185 A1 | 04-11-2015 |
| | | JP | 6243446 B2 | 06-12-2017 |
| | | JP | 2016506524 A | 03-03-2016 |
| | | US | 2014182363 A1 | 03-07-2014 |
| | | WO | 2014104965 A1 | 03-07-2014 |

EPO FORM P0459

For more details about this annex : see Official Journal of the European Patent Office, No. 12/82